# EUROPÄISCHE PATENTANMELDUNG

(11) **EP 2 113 686 A2**
(43) Veröffentlichungstag der Anmeldung: **04.11.2009**
(21) Anmeldenummer: 09154826.3
(22) Anmeldetag: 11.03.2009
(51) Int. Cl.: F16H 37/04, F16H 61/70

(54) **Mehrgruppengetriebe eines Kraftfahrzeuges**

(30) Priorität: 28.04.2008 DE 102008001407
(71) Anmelder: ZF Friedrichshafen AG, 88038 Friedrichshafen (DE)
(72) Erfinder: Dittrich, Alan, 78464 Konstanz (DE); Hoffmann, Rayk, 88048 Friedrichshafen (DE)

(57) **Zusammenfassung**

Die Erfindung betrifft ein Mehrgruppengetriebe eines Kraftfahrzeuges und ein Verfahren zum Betrieb eines Mehrgruppengetriebes eines Kraftfahrzeuges, mit wenigstens zwei in einem Antriebsstrang angeordneten Getriebegruppen (2, 3), bei dem Mittel zum Schalten eines Zwischenganges zur Verringerung oder Vermeidung von Zugkraftunterbrechungen bei Gangwechseln vorgesehen sind.

Um komfortable, zugkraftunterbrechungsfreie Schaltvorgänge mit einem übersetzten Zwischengang bei einem möglichst geringen Konstruktions- und Kostenaufwand zu realisieren, sind zwischen einer mit einem Antriebsmotor wirkverbundenen Antriebswelle (6) und einem Getriebeeingang (5) ein Anfahrelement (41, 41') sowie ein Lastschaltelement (40, 40') angeordnet, wobei mittels des Lastschaltelementes (40, 40') über wenigstens eine als Zwischengangwelle ausgebildete Nebenwelle (48, 48', 49, 49'), mit einem Antriebs-Zahnradsatz (42, 42') und wenigstens einem Abtriebs-Zahnradsatz (50, 50'), unter Umgehung wenigstes einer Hauptgruppe (3) und unabhängig von einem Schließ- bzw. Öffnungsgrad des Anfahrelementes (41, 41') eine Wirkverbindung zwischen der Antriebswelle (6) und einer Getriebeabtriebswelle (36) herstellbar ist.

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 bzw. dem Oberbegriff des Patentanspruchs 12.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus, und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Dadurch entstehen Einschränkungen bezüglich der Fahrleistung aufgrund eines Geschwindigkeitsverlustes sowie gegebenenfalls ein erhöhter Kraftstoffverbrauch. Während sich die Zugkraftunterbrechungen bei Personenwagen durch Einbußen der Fahrdynamik in der Regel eher nur störend auswirken, beispielsweise bei einer sportlich orientierten Fahrweise, kann sich bei schweren Nutzfahrzeugen an Steigungen die Fahrgeschwindigkeit derart verzögern, dass ein Hochschalten unmöglich wird und es zu unerwünschten Rückschaltvorgängen, Kriechfahrten oder sogar zu zusätzlichen Anfahrvorgängen kommt.

Es sind bereits Lösungen vorgeschlagen worden, die diese Zugkraftunterbrechungen reduzieren oder ganz vermeiden. Aus der DE 10 2006 024 370 A1 der Anmelderin ist ein solches automatisiertes Mehrgruppengetriebe mit einer Splittergruppe als Eingangsgetriebe, einem Hauptgetriebe und einer Bereichsgruppe als Ausgangs- oder Nachschaltgetriebe bekannt. Die Bauweise des bekannten Mehrgruppengetriebes mit dem Eingangsgetriebe und dem Hauptgetriebe ermöglicht die Schaltung eines Direktganges als ein Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann, während die Anfahrkupplung eingekuppelt bleibt. Die Lastschaltkupplung überträgt dabei ein Motormoment auf den Getriebeausgang, wobei ein freiwerdendes dynamisches Moment bei einer Drehzahlabsenkung zwischen Ursprungsgang und Zielgang genutzt wird, um den Zugkrafteinbruch weitgehend zu kompensieren. Die Lastschaltkupplung kann zwischen dem Eingangsgetriebe und dem Hauptgetriebe oder zwischen der Anfahrkupplung und dem Eingangsgetriebe angeordnet sein. Die Übersetzung des Zwischenganges ist durch die Direktverbindung der Eingangswelle mit der Hauptwelle als Direktgang festgelegt. Variable Zwischengänge sind nicht vorgesehen. Zudem ist ein Umschalten der Bereichsgruppe nicht ohne weiteres zugkraftunterstützt.

Weiterhin ist aus der DE 10 2004 002 283 A1 der Anmelderin eine Antriebsvorrichtung mit einem Schaltgetriebe bekannt, bei der zwischen einem Antriebsmotor und einer Anfahrkupplung eine Schaltbremskupplung angeordnet ist. Die Schaltbremskupplung ist über eine Nebenwelle und einen Zahnradsatz mit einem Getriebeabtrieb wirkverbindbar. Bei einem Gangwechsel wird die Anfahrkupplung geöffnet, während die Schaltbremskupplung überschneidend eingerückt wird, wodurch sich ein über die Schaltbremskupplung übertragenes Drehmoment am Getriebeausgang abstützt und das Antriebsmoment des Antriebsmotors reduziert wird. Über die Drehmomentabstützung am Getriebeausgang wird der bei Schaltgetrieben übliche vollständige Zugkrafteinbruch verhindert. Bei einem Hochschaltvorgang wird die Motordrehzahl um die sich aus dem Gangwechsel ergebende Drehzahldifferenz bei der Momentabstützung reduziert, wodurch sich die Schaltpause bis zum Abschluss des Gangwechsels verkürzen lässt. Die Zeitspanne der Zugkraftminderung wird somit verringert. Das Schaltgetriebe kann sowohl ein herkömmliches manuelles oder automatisiertes Stufengetriebe als auch ein Grundgetriebe mit einer Nachschaltgruppe sein.

Als nachteilig daran wird beurteilt, dass die Anfahrkupplung beim Gangwechsel geöffnet wird. Zum einen wird der Zugkrafteinbruch lediglich verringert und verkürzt, zum anderen muss dadurch, dass die Anfahrkupplung beim Gangwechsel geöffnet wird, die Schaltbremskupplung der Anfahrkupplung im Kraftfluss vorgeschaltet sein. Dadurch kann, je nach Getriebebauart, ein relativ hoher Implementierungsaufwand erforderlich sein. Weiterhin ist der Zwischengang über genau eine Nebenwelle umgeleitet, wodurch sich für Zwei-Vorgelegewellengetriebe eine weniger optimale Kraftflussverzweigung ergeben kann. Hinweise auf eine Möglichkeit, verschiedene Zwischengangübersetzungen schalten zu können, finden sich in der DE 10 2004 002 283 A1 nicht. Wünschenswert wäre hingegen eine an verschiedene Gruppengetriebebauarten, insbesondere hinsichtlich vorgegebener Einbauverhältnisse und angestrebtem Schaltkomfort, flexibel anpassbare Zwischenganganordnung.

Vor diesem Hintergrund liegt der Erfindung die Aufgabe zugrunde, ein Mehrgruppengetriebe und ein Verfahren zu dessen Betrieb vorzustellen, die mit einem insbesondere hinsichtlich der Einbauverhältnissen, dem Schaltkomfort und der Übersetzung flexibel anpassbaren Zwischengang, bei einem möglichst geringen Konstruktions- und Kostenaufwand, zugkraftunterbrechungsfreie Schaltvorgänge ermöglichen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass bei einem automatisierten Mehrgruppengetriebe mittels einer oder mehrerer Nebenwellen, über die ein Antriebsmoment am Getriebeabtrieb abstützbar ist, und ein die Nebenwellen bei einem Schaltvorgang mit einem Antriebsmoment beaufschlagendes Lastschaltelement als Einzelkupplung oder in einer Doppelkupplung, ohne aufwendige Änderungen an den vorhandenen Getriebegruppen selbst, ein Zwischengang implementierbar ist, der komfortable, zugkraftunterbrechungsfreie Gangwechsel des Gesamtgetriebes ermöglicht.

Demnach geht die Erfindung aus von einem Mehrgruppengetriebe eines Kraftfahrzeuges, mit wenigstens zwei in einem Antriebsstrang angeordneten Getriebegruppen, bei dem Mittel zum Schalten eines Zwischenganges zur Verringerung oder Vermeidung von Zugkraftunterbrechungen bei Gangwechseln vorgesehen sind. Zur Lösung der gestellten Aufgabe sieht die Erfindung zudem vor, dass zwischen einer mit einem Antriebsmotor wirkverbundenen Antriebswelle sowie einem Getriebeeingang ein Anfahrelement und ein Lastschaltelement angeordnet sind, wobei mittels des Lastschaltelementes, über wenigstens eine als Zwischengangwelle ausgebildete Nebenwelle mit einem Antriebs-Zahnradsatz und wenigstens einem Abtriebs-Zahnradsatz, unter Umgehung wenigstes einer Hauptgruppe, unabhängig von einem Schließ- bzw. Öffnungsgrad des Anfahrelementes, eine Wirkverbindung zwischen der Antriebswelle und einer Getriebeabtriebswelle herstellbar ist.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt.

Weiterhin geht die Erfindung aus von einem Verfahren zum Betrieb eines Mehrgruppengetriebes eines Kraftfahrzeuges, mit wenigstens zwei in einem Antriebsstrang angeordneten Getriebegruppen, bei dem bei einem Gangwechsel zur Verringerung oder Vermeidung von Zugkraftunterbrechungen ein Zwischengang geschaltet wird. Die gestellte Aufgabe bezüglich des Verfahrens wird dadurch gelöst, dass zum Schalten eines Zwischenganges bei einem Gangwechsel mittels eines in Schließrichtung angesteuerten Lastschaltelementes über wenigstens eine als Zwischengangwelle ausgebildete Nebenwelle eine Wirkverbindung zwischen einer Antriebswelle und einer Getriebeabtriebswelle unter Umgehung wenigstens einer Hauptgruppe hergestellt wird, so dass wenigstens die Hauptgruppe bei zumindest teilweise geschlossenem, zwischen der Antriebswelle und einer Getriebeeingangswelle angeordnetem Anfahrelement lastfrei schaltbar wird, in der Folge ein eingelegter Ursprungsgang ausgelegt wird, die Drehzahl eines die Antriebswelle antreibenden Antriebsmotors im Schlupfbetrieb des Lastschaltelementes auf eine Anschlussdrehzahl eines Zielganges synchronisiert wird und bei Erreichen der Anschlussdrehzahl ein Zielgang eingelegt und das Lastschaltelement wieder geöffnet wird.

Durch Zuschalten des Zwischenganges werden das Hauptgetriebe und gegebenenfalls das Splittergetriebe lastfrei und somit schaltbar. Die zusätzliche Kupplung stützt im Schlupfbetrieb das Motormoment während einer Zughoch- oder Zugrückschaltung über die Zwischengangwelle am Abtrieb ab, während die Motordrehzahl der Zieldrehzahl des Zielgangs angepasst wird. Bei erreichter Synchrondrehzahl kann der gewünschte Zielgang eingelegt werden. Grundsätzlich sind dabei auch zugkraftunterstützte Gangwechsel mit Gangsprüngen über zwei oder mehr Gangstufen möglich.

Das Anfahrelement bleibt während des Schaltvorgangs stets geschlossen. Es wäre jedoch auch ein Schlupfbetrieb oder ein Öffnen des Anfahrelementes bei der Zwischengangschaltung möglich. Die weitestgehende Verringerung des Zugkrafteinbruchs bis hin zu einer völligen Zugkrafterhaltung ist jedoch eher bei vollständig geschlossenem Anfahrelement erreichbar. Weiterhin werden Schwingungen und Schaltschläge weitgehend vermieden, da der Antriebsstrang während des Gangwechsels durch den Zwischengang stets vorgespannt bleibt. Zudem kann eine Getriebebremse in der Regel entfallen und somit Kosten, Bauraumbedarf und Gewicht eingespart werden, da über den Zwischengang die zu synchronisierenden rotierenden Massen im Antriebsstrang beim Gangwechsel abbremsbar sind.

Die erfindungsgemäße Zwischengangschaltung ist besonders vorteilhaft in automatisierten Mehrgruppengetrieben mit drei Getriebegruppen einsetzbar. Bei einem solchen, beispielsweise in einem mittelschweren bis schweren Nutzfahrzeug eingebauten Getriebe kann eine vorgeschaltete, einer Getriebeeingangswelle zugeordnete zweigängige Splittergruppe und eine zentrale, einer Getriebehauptwelle zugeordnete mehrgängige Hauptgruppe als Vorgelegewellengetriebe und eine nachgeschaltete Bereichsgruppe als ein Planetengetriebe ausgebildet sein.

Außerdem kann vorgesehen sein, dass das Anfahrelement und das Lastschaltelement als eine bauraumsparende Doppelkupplung ausgebildet sind, wobei ein Eingangsteil der Doppelkupplung mit der Antriebswelle verbunden ist, ein Ausgangsteil des Anfahrelementes mit der Getriebeeingangswelle verbunden ist, und ein Ausgangsteil des Lastschaltelementes mit einem auf der Getriebeeingangswelle drehbar gelagerten Losrad des Antriebs-Zahnradsatzes verbunden ist.

Es ist auch möglich, dass das Lastschaltelement und das Anfahrelement als separate Elemente hintereinander angeordnet sind. Dabei sind ein Eingangsteil des Lastschaltelementes und ein Eingangsteil des Anfahrelementes miteinander sowie mit der Antriebswelle verbunden. Ein Ausgangsteil des Anfahrelementes ist mit der Getriebeeingangswelle verbunden, und ein Ausgangsteil des Lastschaltelementes ist mit dem auf der Getriebeeingangswelle drehbar gelagerten Losrad des Antriebs-Zahnradsatzes verbunden. Da das Anfahrelement während des Schaltvorgangs stets geschlossen oder zumindest teilweise geschlossen bleibt, ist die Positionierung des Anfahrelementes und des Lastschaltelementes grundsätzlich variabel, so dass der Einbau der zusätzlichen Kupplung zur Schaltung des Zwischengangs mit einem möglichst geringen Aufwand in ein bestehendes Getriebekonzept realisierbar ist.

Über die Doppelkupplung oder die zweite Kupplung ist der Zwischengang schaltbar. Die Kupplung beaufschlagt dazu am Getriebeeingang über das Losrad den Antriebs-Zahnradsatz mit dem anliegenden Motormoment. Das Losrad des Antriebs-Zahnradsatzes kann direkt mit einem auf der wenigstens einen Nebenwelle angeordneten Festrad im Eingriff stehen oder mit einem zusätzlichen Zwischenrad kämmen, welches seinerseits mit dem Festrad im Eingriff steht.

Ein Abtriebs-Zahnradsatz dient zur Momentabstützung am Getriebeabtrieb. Der Abtriebs-Zahnradsatz kann axial in Höhe der Getriebeabtriebswelle angeordnet sein. Er umfasst ein auf der Nebenwelle angeordnetes Festrad, das direkt mit einem auf der Getriebeabtriebswelle angeordneten Festrad im Eingriff steht oder mit einem zusätzlichen Zwischenrad kämmt, welches seinerseits mit dem Festrad auf der Getriebeabtriebswelle im Zahneingriff ist. Der Zwischengang leitet das Motormoment somit am gesamten Getriebe vorbei direkt zum Getriebeabtrieb.

Grundsätzlich kann der Abtriebs-Zahnradsatz auch der Hauptgruppe nachgeordnet sein, wobei er ein auf der Nebenwelle angeordnetes Festrad umfasst, das direkt mit einem auf der Getriebehauptwelle angeordneten Festrad im Eingriff steht oder mit einem zusätzlichen Zwischenrad kämmt, welches seinerseits mit dem Festrad auf der Getriebehauptwelle im Zahneingriff ist. In diesem Fall würde der Zwischengang nur die Vorschaltgruppe sowie die Hauptgruppe umgehen und das Drehmoment in die Nachschaltgruppe einleiten.

Zusätzlich zu einem einfachen Zwischengang mit festgelegter Zwischengangübersetzung können wählbare Zwischengangübersetzungen durch eine oder mehrere weitere Abtriebs-Zahnradsätze ermöglicht werden. Insbesondere kann ein zweiter Abtriebs-Zahnradsatz der Hauptgruppe nachgeordnet sein, der ein auf der wenigstens einen Nebenwelle angeordnetes Losrad umfasst, das direkt mit einem auf der Getriebehauptwelle angeordneten Festrad im Eingriff steht oder mit einem zusätzlichen Zwischenrad kämmt, welches seinerseits mit einem Festrad auf der Getriebehauptwelle im Eingriff steht, wobei zwischen den beiden Abtriebs-Zahnradsätzen eine die Nebenwelle unterbrechende Schalteinrichtung angeordnet ist, die wahlweise das Losrad des zweiten Abtriebs-Zahnradsatzes mit der Nebenwelle drehfest verbindet oder die Unterbrechung der Nebenwelle kraftschlüssig schließt.

Der zweite Abtriebs-Zahnradsatz kann beispielsweise zwischen der Hauptgruppe und der Bereichsgruppe angeordnet sein. Über eine geeignete Steuerung kann somit wahlweise der eine oder der andere Abtriebs-Zahnradsatz aktiviert werden, um dessen Übersetzung zu wählen. Bei einer Aktivierung des zweiten Abtriebs-Zahnradsatzes ist zusätzlich das Bereichsgetriebe zu berücksichtigen. Je nach Schaltstellung ist eine Direktübersetzung i = 1 des Bereichsgetriebes zum Abtrieb gegeben, d.h. die Übersetzung des Abtriebs-Zahnradsatzes wird unverändert weitergeleitet oder es ist gegebenenfalls zusätzlich eine Übersetzung i ≠ 1 des Bereichsgetriebes zu berücksichtigen.

Weiterhin kann vorgesehen sein, dass wenigstens eine Vorgelegewelle als eine Hohlwelle ausgebildet ist, durch welche die wenigstens eine als Zwischengangwelle ausgebildete Nebenwelle koaxial hindurchgeführt ist. Durch eine derartige koaxiale Anordnung von Vorgelegewelle und Zwischengangwelle wird der Durchmesser des Getriebes nicht vergrößert und somit eine besonders kompakte Bauform des Mehrgruppengetriebes mit Zwischengang erreicht. Dies ist besonders vorteilhaft, da die Einbauverhältnisse in modernen Fahrzeugen ohnehin meist begrenzt sind.

Bei Getrieben mit nur einer Vorgelegewelle genügt für die Umleitung des Momentflusses des Zwischenganges ebenfalls lediglich eine Nebenwelle. Bei einem Zwei-Vorgelegewellen-Getriebe ist hingegen eine Verzweigung des Momentflusses über zwei achsparallel angeordnete Nebenwellen, jeweils eine Nebenwelle auf einer Vorgelegewellenseite, zu bevorzugen. Die Zahnradsätze zum Antrieb und Abtrieb der Nebenwellen sind dann entsprechend zu erweitern.

Als eine vorteilhafte Kombination mit besonders hohem Schaltkomfort in kompakter Bauweise ist beispielsweise eine Zwei-Vorgelegewellen-Bauweise mit Vorgelege-Hohlwellen und durchgeführten Zwischengangwellen, mit vorgeschalteter Doppelkupplung als Anfahr- und Zwischengangkupplung sowie mit einem zusätzlichen zweiten Abtriebs-Zahnradsatz zwischen Hauptgruppe und Bereichsgruppe zur wahlweisen bzw. situationsangepassten Schaltung verschiedener Zwischengangübersetzungen möglich. Selbstverständlich sind auch weitere Kombinationen der beschriebenen oder daraus für den Fachmann leicht ableitbaren Ausführungsformen möglich.

Zur Verdeutlichung der Erfindung ist der Beschreibung eine Zeichnung mit zwei Ausführungsbeispielen beigefügt. In dieser zeigt
Fig. 1 ein Getriebeschema eines Mehrgruppengetriebes eines Kraftfahrzeuges mit Nebenwellen zum Schalten eines Zwischenganges, und
Fig. 2 eine zweite Ausführungsform eines Mehrgruppengetriebes eines Kraftfahrzeuges mit Nebenwellen zum Schalten eines Zwischenganges.

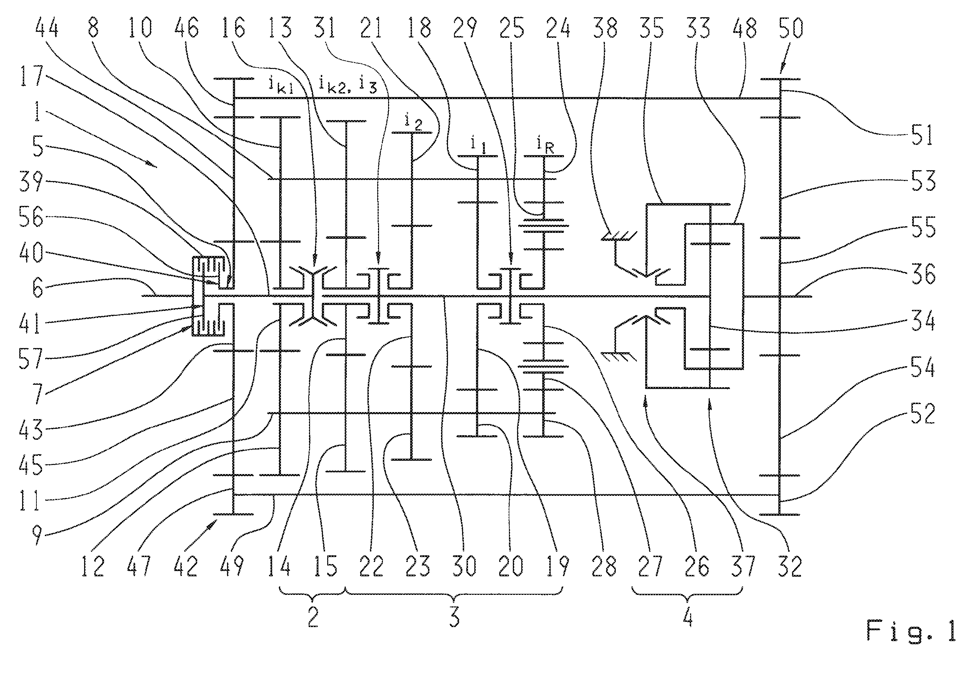

Fig. 1 zeigt demnach ein als Zwei-Vorgelegewellen-Getriebe 1 ausgebildetes automatisiertes Mehrgruppengetriebe mit zwei parallelen, drehbar gelagerten Vorgelegewellen 8, 9 sowie drei hintereinander angeordneten Getriebegruppen 2, 3 und 4, wie es beispielsweise im Antriebsstrang eines Lastkraftfahrzeuges angeordnet sein kann. Ein derartiges Getriebe ist an sich, also ohne Zwischengangschaltung, insbesondere aus der Baureihe ZF-AS Tronic, und mit einer Zwischengangschaltung aus der eingangs erwähnten DE 10 2006 024 370 A1 der Anmelderin bekannt.

Die erste, motorseitig angeordnete Getriebegruppe 2 ist als ein zweigängiges Splittergetriebe ausgebildet. Die zweite, zentrale Getriebegruppe 3 wird durch ein dreigängiges Haupt- oder Grundgetriebe gebildet. Als dritte, abtriebsseitige Getriebegruppe 4 ist ein nachgeschaltetes zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12, bzw. 13, 15 umfassen, die mit einem Losrad 11 bzw. 14 kämmen. Zur Schaltung der Gangkonstanten iₖ₁, iₖ₂ ist eine Schalteinrichtung 16, vorteilhaft mit Synchronisierung, angeordnet, über welche die Losräder 11 bzw. 14 wahlweise drehfest mit einer Getriebeeingangswelle 17 verbindbar sind.

Das Hauptgetriebe 3 weist drei Vorwärtsgänge i₁, i₂ und i₃ sowie einen Rückwärtsgang i_{R} auf. Der 1. Gang und der 2. Gang umfassen jeweils zwei Festräder 18, 20 bzw. 21, 23 und ein Losrad 19 bzw. 22. Der 3. Gang ist gemeinsam mit der zweiten Gangkonstante iₖ₂ des Splittergetriebes 2 realisiert. Der Rückwärts-Gang i_{R} umfasst zwei Festräder 24, 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen. Zur Schaltung des 1. Ganges und des Rückwärts-Ganges ist eine Schalteinrichtung 29 mit Schaltklauen vorhanden, über welche die zugehörigen Losräder 19 bzw. 26 wahlweise drehfest mit einer Getriebehauptwelle 30 verbindbar sind. Zur Schaltung des 2. Ganges und des 3. Ganges ist eine Klauen-Schalteinrichtung 31 angeordnet, über die wahlweise das jeweils zugehörige Losrad 14 bzw. 22 drehfest mit der Getriebehauptwelle 30 koppelbar ist.

Das nachgeschaltete Bereichsgetriebe 4 ist als ein Planetengetriebe ausgebildet. Darin ist ein Planetenradsatz 32 von einem Planetenradträger 33 geführt. Die Planetenräder kämmen einerseits mit einem zentralen Sonnenrad 34 und andererseits mit einem äußeren Hohlrad 35. Das Sonnenrad 34 ist mit der Getriebehauptwelle 30 verbunden. Der Planetenradträger 33 ist wiederum mit einer Getriebeabtriebswelle 36 verbunden. Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38 oder verblockt in einer zweiten Schaltstellung das Hohlrad 35 mit dem Planetenradträger 33.

Aus der Kombination der Getriebegruppen 2, 3 und 4 des dargestellten Getriebeschemas ergeben sich insgesamt 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, so schaltet das Bereichsgetriebe 4 um, und es werden erneut das Hauptgetriebe 3 und das Splittergetriebe 2 alternierend durchgeschaltet, so dass wiederum 2 x 3 = 6 Gänge, nun aber in einem oberen Gangbereich "7. Gang bis 12. Gang", geschaltet werden. Das vorgeschaltete Splittergetriebe 2 schaltet auch die Rückwärts-Gang-Übersetzung i_{R} alternierend, so dass zudem zwei Rückwärtsgänge zur Verfügung stehen.

Zwischen einer Antriebswelle 6 eines nicht näher dargestellten Antriebsmotors und dem Getriebeeingang 5 ist erfindungsgemäß eine, vorteilhaft als Lamellenkupplung ausgebildete Doppelkupplung 7 angeordnet. Die Doppelkupplung 7 weist ein äußeres zylindrisches Eingangsteil 39 mit antreibenden Reibscheiben auf, welches mit der Antriebswelle 6 drehfest verbunden ist. Das Eingangsteil 39 umgreift zwei innere Ausgangsteile 56 und 57 mit nicht dargestellten antreibbaren Reibscheiben. Das der Antriebswelle 6 zugewandte Ausgangsteil 57 bildet zusammen mit dem Eingangsteil 39 ein Anfahrelement 41. Das Ausgangsteil 57 des Anfahrelementes 41 ist mit der Getriebeeingangswelle 17 drehfest verbunden. Das dem Getriebeeingang 5 zugewandte Ausgangsteil 56 bildet zusammen mit dem Eingangsteil 39 ein Lastschaltelement 40 zur Schaltung eines Zwischengangs. Das Ausgangsteil 56 des Lastschaltelementes 40 ist mit einem auf der Getriebeeingangswelle 17 drehbar gelagerten Losrad 43 eines Antriebs-Zahnradsatzes 42 fest verbunden.

Der Antriebs-Zahnradsatz 42 ist zwischen der Doppelkupplung 7 und dem Splittergetriebe 2 angeordnet, also den Gangstufen vorgelagert. Das Losrad 43 steht im Eingriff mit zwei gegenüberliegend angeordneten Zwischenrädern 44 und 45, die jeweils mit einem auf einer Nebenwelle 48, 49 befestigten Festrad 46, 47 kämmen. Die beiden Nebenwellen 48, 49 führen achsparallel an den Getriebegruppen 2, 3 und 4 vorbei zum Abtrieb 36. Der Abtrieb der Nebenwellen 48, 49 ist durch einen der Bereichsgruppe 4 nachgeordneten Abtriebs-Zahnradsatz 50 gebildet. Jeweils ein auf der Nebenwelle 48, 49 angeordnetes Festrad 51, 52 des Abtriebs-Zahnradsatz 50 steht im Eingriff mit einem Zwischenrad 53 bzw. 54. Die gegenüberliegenden Zwischenräder 53 bzw. 54 kämmen mit einem weiteren Festrad 55, welches auf der Getriebeabtriebswelle 36 angeordnet ist. Über das Lastschaltelement 40 ist eine Wirkverbindung zwischen der Antriebswelle 6 bzw. dem Antriebsmotor und der Getriebeabtriebswelle 36 bzw. einer von der Getriebeabtriebswelle 36 beaufschlagten nicht dargestellten Antriebsachse, unter Umgehung der drei Getriebegruppen 2, 3, 4, herstellbar, wobei sich der Momentenfluss über die beiden Nebenwellen 48, 49 verzweigt.

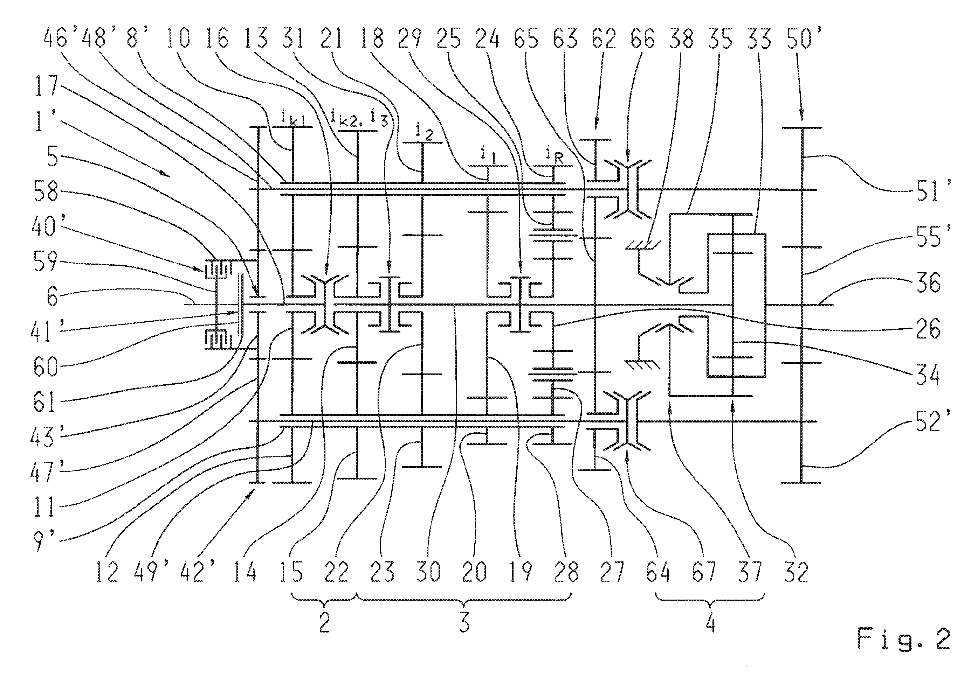

Die Fig. 2 zeigt ein vergleichbares Zwei-Vorgelegewellen-Getriebe 1'. Zwei Vorgelegewellen 8', 9' sind als Hohlwellen ausgebildet, durch die jeweils eine Nebenwelle 48', 49' koaxial hindurchgeführt ist. Ein Antriebs-Zahnradsatz 42' umfasst ein auf der Getriebeeingangswelle 17 gelagertes Losrad 43', welches mit zwei gegenüberliegenden Festrädern 46', 47' der Nebenwellen 48', 49' kämmt. Der Antriebs-Zahnradsatz 42' ist von einem als Reibkupplung ausgebildeten Lastschaltelement 40' zur Schaltung eines Zwischenganges, d.h. zur Herstellung einer Wirkverbindung zwischen Antrieb und Abtrieb während einer Betätigung einer oder mehrerer der Schalteinrichtungen 16, 29, 31, 37 bei einem Schaltvorgang der Getriebegruppen 2, 3, 4, beaufschlagbar.

Das Lastschaltelement 40' ist zwischen dem (nicht dargestellten) Antriebsmotor und einem separaten herkömmlichen Anfahrelement 41' angeordnet. Ein inneres Eingangsteil 59 des Lastschaltelementes 40' ist auf der Antriebswelle 6 befestigt. Ein Eingangsteil 60 des Anfahrelementes 41' ist diesem Eingangsteil 59 nachgeschaltet. Ein Ausgangsteil 61 des Anfahrelementes 41' ist mit der Getriebeeingangswelle 17 verbunden. Ein Ausgangsteil 58 des Lastschaltelementes 40' ist hingegen mit dem Losrad 43' des Antriebs-Zahnradsatzes 42' der Nebenwellen 48', 49' verbunden.

Weiterhin sind zwei Abtriebs-Zahnradsätze 50', 62 der Nebenwellen 48', 49' vorgesehen. Der eine Abtriebs-Zahnradsatz 50' ist wie im Ausführungsbeispiel von Fig. 1 direkt am Getriebeausgang angeordnet. Er umfasst je Nebenwelle 48', 49' ein Festrad 51', 52', welche mit einem auf der Getriebeabtriebswelle 36 angeordneten Festrad 55' im Eingriff stehen.

Wahlweise ist anstelle dieses Abtriebes 50' der zweite Abtriebs-Zahnradsatz 62 schaltbar. Dieser Abtriebs-Zahnradsatz 62 ist zwischen dem Hauptgetriebe 3 und dem Bereichsgetriebe 4 angeordnet. Er umfasst auf jeder Nebenwelle 48', 49' ein Losrad 63 bzw. 64, welche mit einem auf der Getriebehauptwelle 30 angeordneten Festrad 65 im Eingriff stehen. Die Losräder 63, 64 sind jeweils mittels einer zugehörigen Schalteinrichtung 66 bzw. 67 drehfest mit der jeweiligen Nebenwelle 48', 49' verbindbar. Die Schalteinrichtungen 66, 67 unterbrechen die Nebenwellen 48', 49', so dass bei einer Zwischengangschaltung wahlweise wechselseitig der ausgangsseitige Abtriebs-Zahnradsatz 50' oder der zusätzliche Abtriebs-Zahnradsatz 62 zur Abstützung des Antriebsmomentes direkt an der Getriebeabtriebswelle 36 oder an der Getriebehauptwelle 30 aktivierbar ist.

Ein erfindungsgemäßes Verfahren zum Betrieb des Getriebes 1, 1' wird folgendermaßen durchgeführt. Bei einer Schaltanforderung im Fahrbetrieb bleibt das Anfahrelement 41, 41' vollständig geschlossen. Der Zwischengang wird zugeschaltet. Dies erfolgt, in dem das Lastschaltelement 40, 40' im Schlupf angesteuert betrieben wird. Das Motormoment des Antriebsmotors wird so über den Antriebs-Zahnradsatz 42, 42', die Nebenwellen 48, 49 bzw. 48', 49' und den Abtriebs-Zahnradsatz 50, 50' auf die Getriebeabtriebswelle 36 oder wahlweise über den Abtriebs-Zahnradsatz 62 auf die Getriebehauptwelle 30 und von dort über die Bereichsgruppe 4 an die Getriebeabtriebswelle 36 übertragen. Über die Wahl des Abtriebs-Zahnradsatzes 50, 50', 62 und gegebenenfalls die Schaltstellung der Bereichsgruppe 4 sind somit verschiedene Zwischengangübersetzungen realisierbar. Das Motormoment stützt sich in jedem Fall unter Umgehung des Hauptgetriebes 3 und der vorgeschalteten Splittergruppe 2 am Abtrieb, d.h. über die angetriebenen Fahrzeugräder an der Fahrbahn ab. Folglich werden das Hauptgetriebe 3 und das Splittergetriebe 2 bei geschlossenem Anfahrelement 41, 41' lastfrei und schaltbar. Der eingelegte Ursprungsgang wird über eine (nicht dargestellte) Getriebesteuerung ausgelegt, wobei durch die Momentenabstützung des Zwischenganges die Zugkraft erhalten bleibt.

Die Motordrehzahl wird bei einem Hochschaltvorgang während der Momentenabstützung über das schleifende Lastschaltelement 40, 40' auf eine Synchrondrehzahl eines Zielgangs abgesenkt. Das bei der Drehzahlabsenkung freiwerdende Drehmoment wird zur Kompensation des Zugkrafteinbruchs während der Neutralstellung der beteiligten Schaltelemente genutzt. Sobald die Synchrondrehzahl erreicht ist, wird der Zielgang im Hauptgetriebe 3 eingelegt und gegebenenfalls die Splittergruppe 2 über eine zwischenzeitliche Neutralstellung in die neue oder bisherige, der Schaltfolge bzw. dem angewählten Gangsprung entsprechende, Gangkonstante geschaltet. Abschließend, gegebenenfalls überschneidend mit dem Einrücken des Zielganges, öffnet das Lastschaltelement 40, 40' wieder, wodurch die Umleitung des Momentenflusses über die Nebenwellen 48, 49 bzw. 48', 49' aufgehoben und der zugkraftunterstützte Gangwechsel abgeschlossen wird.

### Bezugszeichenliste

- 1, 1': Zwei-Vorgelegewellen-Getriebe
- 2: Splittergetriebe
- 3: Hauptgetriebe
- 4: Bereichsgetriebe
- 5: Getriebeeingang
- 6: Antriebswelle
- 7: Doppelkupplung
- 8, 8': Vorgelegewelle
- 9, 9': Vorgelegewelle
- 10: Festrad
- 11: Losrad
- 12: Festrad
- 13: Festrad
- 14: Losrad
- 15: Festrad
- 16: Schalteinrichtung
- 17: Getriebeeingangswelle
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39: Kupplungseingangsteil
- 40, 40': Lastschaltelement
- 41, 41': Anfahrelement
- 42, 42': Antriebs-Zahnradsatz
- 43, 43': Losrad
- 44: Zwischenrad
- 45: Zwischenrad
- 46, 46': Festrad
- 47, 47': Festrad
- 48, 48': Nebenwelle
- 49, 49': Nebenwelle
- 50, 50': Abtriebs-Zahnradsatz
- 51, 51': Festrad
- 52, 52': Festrad
- 53: Zwischenrad
- 54: Zwischenrad
- 55, 55': Festrad
- 56: Kupplungsausgangsteil
- 57: Kupplungsausgangsteil
- 58: Kupplungsausgangsteil
- 59: Kupplungseingangsteil
- 60: Kupplungseingangsteil
- 61: Kupplungsausgangsteil
- 62: Abtriebs-Zahnradsatz
- 63: Losrad
- 64: Losrad
- 65: Festrad
- 66: Schalteinrichtung
- 67: Schalteinrichtung
- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang

## Patentansprüche

1. Mehrgruppengetriebe eines Kraftfahrzeuges, mit wenigstens zwei in einem Antriebsstrang angeordneten Getriebegruppen (2, 3), bei dem Mittel zum Schalten eines Zwischenganges zur Verringerung oder Vermeidung von Zugkraftunterbrechungen bei Gangwechseln vorgesehen sind, **dadurch gekennzeichnet, dass** zwischen einer mit einem Antriebsmotor wirkverbundenen Antriebswelle (6) und einem Getriebeeingang (5) ein Anfahrelement (41, 41') und ein Lastschaltelement (40, 40') angeordnet sind, wobei mittels des Lastschaltelementes (40, 40') über wenigstens eine als Zwischengangwelle ausgebildete Nebenwelle (48, 48', 49, 49') mit einem Antriebs-Zahnradsatz (42, 42') und wenigstens einem Abtriebs-Zahnradsatz (50, 50') unter Umgehung wenigstes einer Hauptgruppe (3), unabhängig von einem Schließ- bzw. Öffnungsgrad des Anfahrelementes (41, 41'), eine Wirkverbindung zwischen der Antriebswelle (6) und einer Getriebeabtriebswelle (36) herstellbar ist.

2. Mehrgruppengetriebe nach Anspruch 1, **dadurch gekennzeichnet, dass** drei Getriebegruppen (2, 3, 4) vorgesehen sind, wobei eine vorgeschaltete, einer Getriebeeingangswelle (17) zugeordnete zweigängige Splittergruppe (2) und eine zentrale, einer Getriebehauptwelle (30) zugeordnete mehrgängige Hauptgruppe (3) als Vorgelegewellengetriebe ausgebildet sind und eine nachgeschaltete Bereichsgruppe (4) als ein Planetengetriebe ausgebildet ist.

3. Mehrgruppengetriebe nach Anspruch 1 oder 2, **dadurch gekennzeichnet, dass** das Anfahrelement (41) und das Lastschaltelement (40) als eine eine Baueinheit bildende Doppelkupplung (7) ausgebildet sind, wobei ein Eingangsteil (39) der Doppelkupplung (7) mit der Antriebswelle (6) verbunden ist, ein Ausgangsteil (57) des Anfahrelementes (41) mit der Getriebeeingangswelle (17) verbunden ist und ein Ausgangsteil (56) des Lastschaltelementes (40) mit einem auf der Getriebeeingangswelle (17) drehbar gelagerten Losrad (43) des Antriebs-Zahnradsatzes (42) verbunden ist.

4. Mehrgruppengetriebe nach Anspruch 1 oder 2, **dadurch gekennzeichnet, dass** das Lastschaltelement (40') und das Anfahrelement (41') als separate Elemente hintereinander angeordnet sind, wobei ein Eingangsteil (59) des Lastschaltelementes (40') und ein Eingangsteil (60) des Anfahrelementes (41') miteinander und mit der Antriebswelle (6) verbunden sind, ein Ausgangsteil (61) des Anfahrelementes (41') mit der Getriebeeingangswelle (17) verbunden ist und ein Ausgangsteil (58) des Lastschaltelementes (40') mit einem auf der Getriebeeingangswelle (17) drehbar gelagerten Losrad (43') des Antriebs-Zahnradsatzes (42') verbunden ist.

5. Mehrgruppengetriebe nach einem der Ansprüche 1 bis 4, **dadurch gekennzeichnet, dass** das Losrad (43, 43') des Antriebs-Zahnradsatzes (42, 42') direkt mit einem auf der wenigstens einen Nebenwelle (48, 48', 49, 49') angeordneten Festrad (46, 46', 47, 47') im Eingriff ist oder mit einem zusätzlichen Zwischenrad (44, 45) kämmt, welches seinerseits mit dem Festrad (46, 46', 47, 47') im Eingriff steht.

6. Mehrgruppengetriebe nach einem der Ansprüche 1 bis 5, **dadurch gekennzeichnet, dass** der wenigstens eine Abtriebs-Zahnradsatz (50, 50') in Höhe der Getriebeabtriebswelle (36) angeordnet ist und ein auf der wenigstens einen Nebenwelle (48, 48', 49, 49') angeordnetes Festrad (51, 51', 52, 52') umfasst, das direkt mit einem auf der Getriebeabtriebswelle (36) angeordneten Festrad (55, 55') im Eingriff steht oder mit einem zusätzlichen Zwischenrad (53, 54) kämmt, welches seinerseits mit dem Festrad (51, 51', 52, 52') auf der Getriebeabtriebswelle (36) im Eingriff steht.

7. Mehrgruppengetriebe nach einem der Ansprüche 1 bis 5, **dadurch gekennzeichnet, dass** der wenigstens eine Abtriebs-Zahnradsatz (50, 50') der Hauptgruppe (3) nachgeordnet ist und ein auf der wenigstens einen Nebenwelle (48, 48', 49, 49') angeordnetes Festrad (51, 51', 52, 52') umfasst, das direkt mit einem auf der Getriebehauptwelle (30) angeordneten Festrad (55, 55') im Eingriff steht oder mit einem zusätzlichen Zwischenrad (53, 54) kämmt, welches seinerseits mit dem Festrad (51, 51', 52, 52') auf der Getriebehauptwelle (30) im Eingriff steht.

8. Mehrgruppengetriebe nach einem der Ansprüche 1 bis 7, **dadurch gekennzeichnet, dass** zusätzlich ein zweiter Abtriebs-Zahnradsatz (62) der Hauptgruppe (3) nachgeordnet ist, der ein auf der wenigstens einen Nebenwelle (48, 48', 49, 49') angeordnetes Losrad (63, 64) umfasst, das direkt mit einem auf der Getriebehauptwelle (30) angeordneten Festrad (65) im Eingriff steht oder mit einem zusätzlichen Zwischenrad kämmt, welches seinerseits mit einem Festrad auf der Getriebehauptwelle (30) im Eingriff steht, wobei zwischen den beiden Abtriebs-Zahnradsätzen (50, 50'; 62) eine die Nebenwelle (48, 48', 49, 49') unterbrechende Schalteinrichtung (66, 67) angeordnet ist, die wahlweise das Losrad (63, 64) des zweiten Abtriebs-Zahnradsatzes (62) mit der Nebenwelle (48, 48', 49, 49') drehfest verbindet oder die Unterbrechung der Nebenwelle (48, 48', 49, 49') kraftschlüssig schließt.

9. Mehrgruppengetriebe nach Anspruch 8, **dadurch gekennzeichnet, dass** der zweite Abtriebs-Zahnradsatz (62) zwischen der Hauptgruppe (3) und der Bereichsgruppe (4) angeordnet ist.

10. Mehrgruppengetriebe nach einem der Ansprüche 1 bis 9, **dadurch gekennzeichnet, dass** wenigstens eine Vorgelegewelle (8', 9') als eine Hohlwelle ausgebildet ist, durch welche die wenigstens eine als Zwischengangwelle ausgebildete Nebenwelle (48', 49') koaxial hindurchgeführt ist.

11. Mehrgruppengetriebe nach einem der Ansprüche 1 bis 10, **dadurch gekennzeichnet, dass** zwei achsparallel angeordnete Nebenwellen (48, 48', 49, 49') als Zwischengangwellen vorgesehen sind, über die sich der Kraftfluss des Zwischengangs verzweigt.

12. Verfahren zum Betrieb eines Mehrgruppengetriebes (1, 1') eines Kraftfahrzeuges, mit wenigstens zwei in einem Antriebsstrang angeordneten Getriebegruppen (2, 3), bei dem bei einem Gangwechsel zur Verringerung oder Vermeidung von Zugkraftunterbrechungen ein Zwischengang geschaltet wird, **dadurch gekennzeichnet, dass** zum Schalten eines Zwischenganges bei einem Gangwechsel mittels eines in Schließrichtung angesteuerten Lastschaltelementes (40, 40') über wenigstens eine als Zwischengangwelle ausgebildete Nebenwelle (48, 48', 49, 49') eine Wirkverbindung zwischen einer Antriebswelle (6) und einer Getriebeabtriebswelle (36) unter Umgehung wenigstens einer Hauptgruppe (3) hergestellt wird, so dass wenigstens die Hauptgruppe (3) bei zumindest teilweise geschlossenem, zwischen der Antriebswelle (6) und einer Getriebeeingangswelle (17) angeordnetem Anfahrelement (41, 41') lastfrei schaltbar wird, in der Folge ein eingelegter Ursprungsgang ausgelegt wird, die Drehzahl eines die Antriebswelle (6) antreibenden Antriebsmotors im Schlupfbetrieb des Lastschaltelementes (40, 40') auf eine Anschlussdrehzahl eines Zielganges synchronisiert wird und bei Erreichen der Anschlussdrehzahl ein Zielgang eingelegt und das Lastschaltelement (40, 40') wieder geöffnet wird.

13. Verfahren nach Anspruch 12, **dadurch gekennzeichnet, dass** der Zwischengang wahlweise über einen ersten, der wenigstens einen Nebenwelle (48, 48', 49, 49') zugehörigen Abtriebs-Zahnradsatz (50, 50'), welcher mit direkt der Getriebeabtriebswelle (36) zusammenwirkt, oder über einen zweiten, der wenigstens einen Nebenwelle (48, 48', 49, 49') zugehörigen Abtriebs-Zahnradsatz (62), welcher mit einer Getriebehauptwelle (30) zusammenwirkt, die ihrerseits in Wirkverbindung mit der Getriebeabtriebswelle (36) steht, geschaltet wird.

14. Verfahren nach Anspruch 12 oder 13, **dadurch gekennzeichnet, dass** der Zwischengang stets bei vollständig geschlossenem Anfahrelement (41, 41') geschaltet wird.
